# EUROPÄISCHE PATENTSCHRIFT

(11) **EP 0 437 703 B1**
(45) Veröffentlichungstag und Bekanntmachung des Hinweises auf die Patenterteilung: **20.09.1995**
(21) Anmeldenummer: 90122269.5
(22) Anmeldetag: 22.11.1990
(51) Int. Cl.: B29C 59/04

(54) **Prägeeinrichtung einer Kalanderanlage für thermoplastische Kunststoffe**
Embossing device of a calendering installation for thermoplastic materials
Dispositif de goufrage d'une installation de calandrage pour matériaux thermoplastiques

(30) Priorität: 17.01.1990 DE 4001105
(43) Veröffentlichungstag der Anmeldung: 24.07.1991
(73) Patentinhaber: HERMANN BERSTORFF Maschinenbau GmbH, D-30627 Hannover (Kleefeld) (DE)
(72) Erfinder: Heise, Wolfgang, W-3000 Hannover 51 (DE); Trzynka, Kurt, W-3000 Hannover 61 (DE); Kubik, Andreas, W-3000 Hannover 61 (DE)

(56) Entgegenhaltungen:
- DE-A- 1 729 043
- DE-C- 3 506 256
- US-A- 3 107 394

## Beschreibung

Die Erfindung betrifft eine Prägeeinrichtung einer Kalanderanlage für thermoplastische Kunststoffe.

Eine derartige Kalanderanlage für thermoplastische Kunststofffolien mit einem Folienkalander und einem diesem nachgeordneten Prägekalander mit einer Prägewalze, einer einen elastischen Belag aufweisenden Gegenwalze und einer Andrückwalze, die in einem verfahrbaren Rahmen angeordnet sind, ist aus der DE-OS 17 29 043 bekannt.

In Kalanderanlagen für die Herstellung von PVC-Folien wird die Folie unmittelbar nach Verlassen des Kalanders in einer Abzugseinrichtung in einem Verhältnis von etwa eins zu zwei gezogen.

Nach dem Ziehvorgang läuft die Folie in den Prägekalander, bestehend aus einer Prägewalze, einer elastischen Gegenwalze sowie einer Antriebswalze. Die mit einem elastischen Mantel ausgebildete Gegenwalze wird durch die Prägewalze gegen die Antriebswalze gedrückt, wodurch gleichzeitig alle Walzen in Drehbewegung versetzt werden.

Bei der Durchführung des Prägevorgangs ist von besonderer Bedeutung, daß die Folie rechtwinkelig in den Prägespalt zwischen Gegenwalze und Prägewalze einläuft, ohne daß die Folie vorher die Präge- oder Gegenwalze berührt.

Bei der Herstellung eines vielseitigen Folienprogrammes auf einer Kalanderanlage ist es von großer Bedeutung, wechselweise entweder die untere oder die obere Seite oder beide Seiten einer Kunststoffolie in Abhängigkeit von der Folienart prägen zu können.

Wenn in der Vergangenheit bei einer bestimmten Folienart die Unterseite geprägt werden sollte, erforderte ein derartiger Umstellungsvorgang eine völlige Demontage des Prägekalanders, insbesonder auch deswegen, weil die Folie senkrecht oder waagerecht und ohne vorzeitige Berührung einer der Walzen in den Prägespalt geführt werden muß.

Ein derartiger Umstellungsvorgang der Kalanderlinie bedeutet mindestens einen Tag Produktionsausfall.

Zur Vermeidung dieses Nachteiles wurde in der DE-PS 35 06 256 vorgeschlagen, die Präge-, Gegen- und Andrückwalze mit ihrem verfahrbaren Rahmen so anzuordnen, daß dieser um einen im Fahrweg des Rahmens befindlichen Drehpunkt in eine vertikale Stellung verschwenkbar ist. Mit dieser Vorrichtung ließ sich zwar die Prägung der Folie von der einen oder der anderen Seite ohne langwierige Maschinenumrüstung vornehmen, das Prägen der Folie von beiden Seiten in einem Produktionsablauf ließ sich damit aber nicht erreichen. Vielmehr mußte die Folie zum Prägen auch der zweiten Seite zwischengelagert und dann einer weiteren Erwärmungs- und Prägeanlage zugeführt werden.

Zudem ist eine Kalanderanlage mit Tandem-Prägeeinrichtung zur Vor- und Rückseitenprägung von PVC-Folien bekannt geworden. Bei dieser Anlage wird die Folie von einem Kalander über eine aus mehreren, nebeneinander angeordneten Walzen bestehende Abzugseinrichtung einem ersten horizontal angeordneten Prägewerk mit Präge-, Gegen- und Andrückwalze zugeführt. Eine zweite Abzugsanlage nimmt die einseitig geprägte Folie auf und leitet sie zu einem zweiten Prägewerk weiter, in dem die Präge-, Gegen- und Andrückwalze vertikal übereinander angeordnet sind. Hier erfolgt die Prägung der zweiten Folienseite. Abschließend nimmt eine dritte Abzugseinrichtung die Folie auf und fördert sie weiter (Kraftanlagen Heidelberg, Firmendruckschrift 2389/2.0/10.89/Br.)

Nachteilig bei dieser Kalanderanlage mit Tandem-Prägeeinrichtung ist, daß für die Anordnung des zweiten Prägewerkes ein vergleichsweise aufwendiger und kostenintensiver zweiter Walzenrahmen mit einer weiteren Andrückwalze notwendig ist. Ausserdem ist das einseitige Prägen der Folie nur dann möglich, wenn das zweite Prägewerk aus der Produktionslinie herausgeschwenkt und die Folie zwischen der letzten Walze der zweiten Abzugseinrichtung und der ersten Walze der dritten Abzugseinrichtung weitergeleitet wird. In einem solchen Fall ist ein ungünstiges weiteres Durchhängen der Folie in diesem Bereich zu erwarten. Ein weiterer Nachteil ist, daß diese Anlage einen relativ großen Stellplatzbedarf hat, da ausreichend Raum für das aus der Produktionslinie ausschwenkbare zweite Prägewerk freizuhalten ist.

Es ist die Aufgabe der Erfindung, eine kompakte, doppelseitig prägefähige Kalanderanlage vorzustellen, die eine schnelle und einfache Umstellung vom Prägen der Folienoberseite auf ein Prägen der Folienunterseite bzw. beidseitigem Prägen ermöglicht.

Diese Aufgabe wird erfindungsgemäß durch die im Hauptanspruch beschriebenen Merkmale gelöst.

Weiterbildungen und vorteilhafte Ausgestaltungen der Erfindung sind den Unteransprüchen zu entnehmen.

Durch die in etwa horizontale Anordnung der Walzen beider Prägekalander auf einen horizontal unter der Folienabzugseinrichtung verfahrbaren gemeinsamen Rahmen, ist eine sehr kompakte Bauweise einer Doppelprägeeinrichtung für eine Folienkalanderanlage möglich.

Zur Umstellung des Produktionsprogramms von oberseitig, unterseitig oder beidseitig geprägten Folien, braucht lediglich der verfahrbare Rahmen verschoben und die von der Abzugseinrichtung in den Prägespalt des ersten, des zweiten oder beider Prägekalander eingeführt zu werden.

Die Erfindung läßt sich anhand eines bevorzugten Ausführungsbeispiels näher erläutern.

Es zeigen:
- Fig. 1: eine schematisierte Kalanderanlage mit der Doppelprägeeinrichtung beim Prägen der Folienoberseite.
- Fig. 2: die Anlage gemäß Fig. 1 beim Prägen der Folienunterseite.
- Fig. 3: die Anlage gemäß Fig. 1 beim beidseitigen Prägen der Folie.

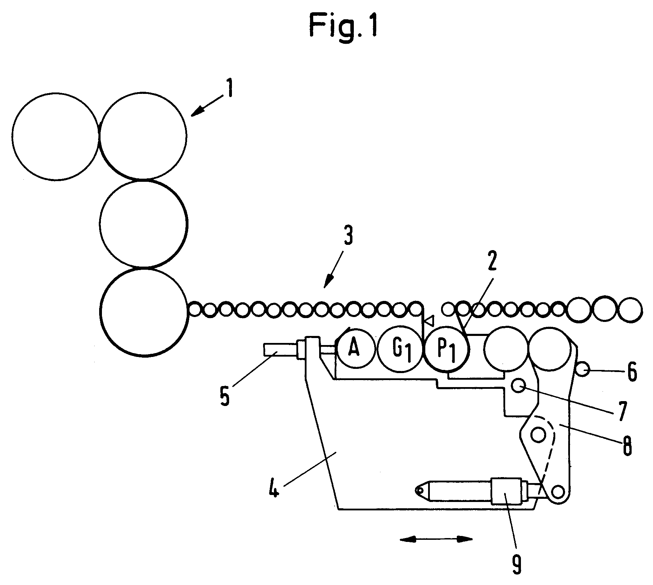

In Fig. 1 ist eine Kalanderanlage dargestellt, die aus einem Kalander 1 zur Herstellung einer thermoplastischen Folie 2, einer die Folie 2 von dem Kalander 1 abnehmende und weiterleitende Abzugseinrichtung 3 und einen Doppelprägekalander auf einem horizontal verfahrbaren Rahmen 4 besteht.

Der Doppelprägekalander umfaßt einen ersten Prägekalander, in dem die Folie 2 von der Abzugseinrichtung 3 kommend, direkt in den Spalt zwischen einer Prägewalze P₁ und einer einen elastischen Belag aufweisenden Gegenwalze G₁ geführt wird. Die Gegenwalze G₁ wird von einer Andrückwalze A angetrieben, die ihrerseits von einem Hydraulikzylinder 5 gegen die Gegenwalze gepreßt wird. Die Andrück-, die Gegen- und die Prägewalze sind horizontal nebeneinander auf dem Rahmen 4 gelagert.

In diesem ersten Prägekalander wird die Folie 2 einseitig auf der Oberseite geprägt und anschließend von der Abzugseinrichtung 3 aufgenommen und zur weiteren Bearbeitung weitergeleitet.

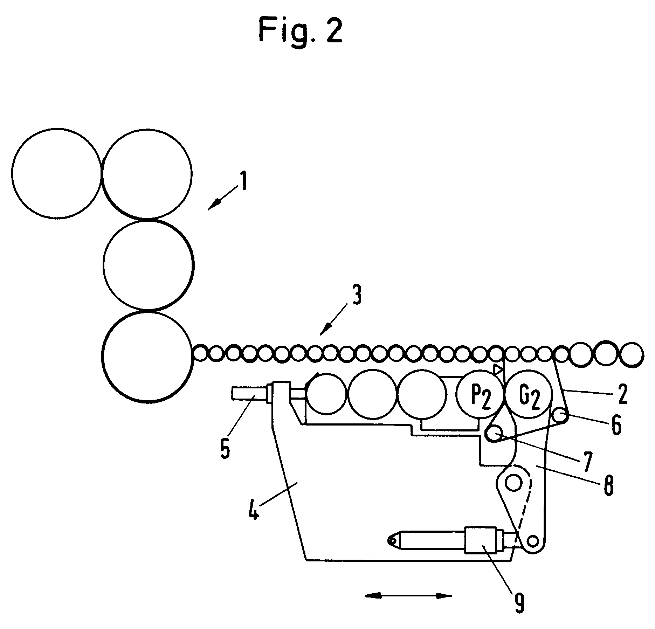

Fig. 2 zeigt die Anlage in der Stellung, in der die Folie 2 mittels eines zweiten Prägekalanders von der Unterseite prägbar ist. Hierzu wird der Rahmen 4 unter der Abzugseinrichtung 3 so verfahren, daß die Folie in den Spalt der ebenfalls horizontal nebeneinander im Rahmen 4 gelagerten Prägewalze P₂ und Gegenwalze G₂ einführbar ist. Nach dem Prägevorgang wird die Folie 2 über die Umlenkwalzen 6, 7 zum Weitertransport zur Abzugseinrichtung 3 weitergeleitet.

Die Gegenwalze G₂ dieses zweiten Prägekalanders wird direkt angetrieben und über einen Hebelarm 8 von einem Hydraulikzylinder 9 gegen die Prägewalze P₂ gepreßt.

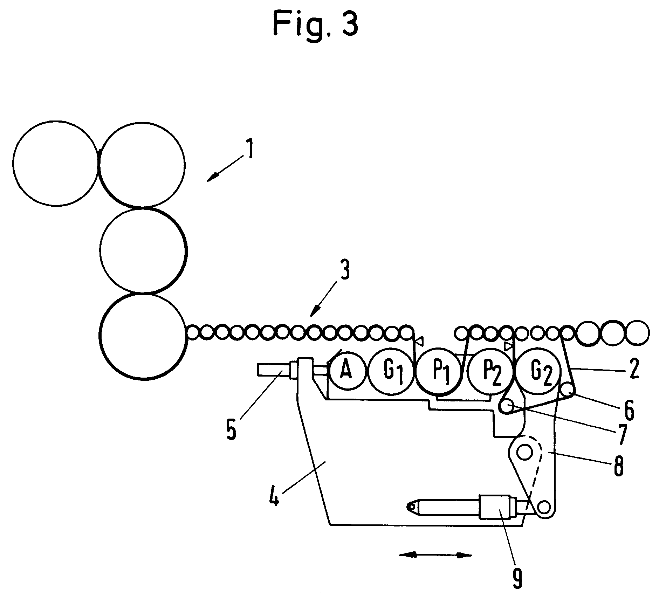

Für den Fall, daß die Folie beidseitig geprägt werden soll, wird, wie Fig. 3 entnehmbar ist, der Rahmen 4 durch horizontales Verfahren unter der Abzugseinrichtung in die Stellung gebracht, in der die Folie zum Prägen der Folienoberseite in den ersten Prägekalander einführbar ist. Nach dem Prägen der Folienoberseite wird die Folie 2 von der Abzugseinrichtung 3 aufgenommen und zum zweiten Prägekalander weitergeleitet. Im zweiten Prägekalander wird die Folienrückseite geprägt und nach Verlassen des Prägespaltes zwischen der Prägewalze P₂ und der Gegenwalze G₂ über Umlenkwalzen 6, 7 zur Abzugseinrichtung 3 weitergeleitet, die die doppelseitig geprägte Folie 2 zur weiteren Bearbeitung weiterleitet.

Es sind auch Anordnungen der Prägekalander möglich, bei denen die horizontale Lagerebene des zweiten Prägekalanders über oder unter der horizontalen Lagerebene des ersten Prägekalanders auf dem gemeinsamen Rahmen 4 befindlich sind.

## Patentansprüche

1. Doppelprägeeinrichtung einer Kalanderanlage für thermoplastische Kunststoffe, bei der
- einem Folienkalander (1) eine Folienabzugseinrichtung (3) für die Folie (2) nachgeordnet ist,
- unterhalb der Folienabzugseinrichtung (3) zwei Prägekalander in einem gemeinsamen Rahmen (4) derart angeordnet sind, daß deren Walzen (P₁, G₁, P₂, G₂) zur Prägung der Folienober- und der Folienunterseite in etwa horizontal hintereinander liegen,
- der Rahmen (4) unter der Folienabzugseinrichtung (3) horizontal verfahrbar ist, derart, daß ein wahlweises Einführen der Folie(2) in die Prägespalte der Prägekalander möglich ist und die Folie (2) auf der einen oder anderen Seite, oder auch beidseitig, geprägt werden kann.

2. Doppelprägeeinrichtung gemäß Anspruch 1, dadurch gekennzeichnet, daß der eine Prägekalander über eine Andrückwalze (1), eine einen elastischen Belag aufweisende Gegenwalze (G₁) und eine Prägewalze (P₁) verfügt, und daß der andere Prägekalander über eine direkt angetriebene, einen elastischen Belag aufweisende Gegenwalze (G₂) und eine zweite Prägewalze (P₂) verfügt.

3. Doppelprägeeinrichtung gemäß den Ansprüchen 1 und 2, dadurch gekennzeichnet, daß die Gegenwalze (G₂) mit Hilfe eines hydraulischen Stellzylinders (9) über einen Hebel (8) gegen die Prägewalze (P₂) schwenkbar ist.

4. Doppelprägeeinrichtung gemäß den Ansprüchen 1 bis 3, dadurch gekennzeichnet, daß die in etwa horizontale Lagerebene des Prägekalanders für die Folienoberseite über oder unter der in etwa horizontalen Lagerebene des Prägekalanders für die Folienunterseite auf dem gemeinsamen Rahmen (4) angeordnet ist.

## Claims

1. Duplex embossing device for a calender line for processing thermoplastics with
- a calender (1) for producing films and a film take-off device (3) which takes the film (2) and is arranged downstream from the calender,
- two embossing calenders arranged on a single frame (4) below the film take-off device (3) such as to ensure that the rolls of the embossing calenders (P₁, G₁, P₂, G₂) for embossing the top and the bottom sides of the film are arranged one behind the other on a more or less horizontal line,
- the frame (4) that is displaceable in horizontal direction below the film take-off device (3) in order to lead the film (2) alternatively into the embossing gaps of both embossing calenders and to emboss the film (2) either on the top or the bottom side or on both sides.

2. Duplex embossing device according to claim 1 characterized in that one embossing calender is equipped with a pressure roll (A), a counter-roll provided with an elastic coating (G₁) and an embossing roll (P₁), while the other embossing calender is provided with a directly driven counter-roll (G₂) that is also equipped with an elastic coating and an embossing roll (P₂).

3. Duplex embossing device according to claims 1 and 2, characterized in that the counter-roll (G₂) can be swivelled against the embossing roll (P₂) by means of a lever (8) that is actuated by a hydraulic adjusting cylinder (9).

4. Duplex embossing device according to claims 1 to 3, characterized in that the more or less horizontal bearing plane of the embossing calender for the embossing of the top side is arranged above or below the more or less horizontal bearing plane of the embossing calender used for embossing the bottom side of the film, with both planes being arranged on a single frame (4).

## Revendications

1. Dispositif de double grainage d'une installation de calandrage pour des matières thermoplastiques, avec
un dispositif de tirage de feuilles (3) pour la feuille (2) étant disposé en aval de la calandre pour feuilles (1),
deux calandres de grainage étant disposées au-dessous du dispositif de tirage de feuilles (3) dans un châssis commun (4) de sorte que ses cylindres (P₁, G₁, P₂, G₂) sont à peu près horizontalement disposés l'un après l'autre pour le grainage de la face supérieure et inférieure,
le châssis (4) étant déplaçable horizontalement au-dessous du dispositif de tirage de feuilles (3) de sorte qu'une introduction facultative de la feuille (2) dans l'écartement de grainage de la calandre de grainage est possible et que la feuille (2) peut être grainée sur une face ou sur l'autre ou également des deux faces.

2. Dispositif de double grainage selon la revendication 1, caractérisé en ce que l'une des calandres de grainage est munie d'un cylindre de pression (A), d'un contre-cylindre présentant un revêtement élastique (G₁), et d'un cylindre graineur (P₁), et que l'autre calandre de grainage est munie d'un contre-cylindre (G₂) directement entraîné avec un revêtement élastique et d'un deuxième cylindre graineur (P₂).

3. Dispositif de double grainage selon les revendications 1 et 2, caractérisé en ce que le contre-cylindre (G₂) peut être pivoté contre le cylindre graineur (P₂) à l'aide d'un vérin de réglage hydraulique (9) au moyen d'un levier (8).

4. Dispositif de double grainage selon les revendications 1 à 3, caractérisé en ce que le niveau de palier à peu près horizontal de la calandre de grainage pour la face supérieure de la feuille est disposé au-dessus ou au-dessous du niveau de palier à peu près horizontal de la calandre de grainage pour la face inférieure de la feuille sur le châssis commun (4).
